# EUROPÄISCHE PATENTSCHRIFT

(11) **EP 0 764 754 B1**
(45) Veröffentlichungstag und Bekanntmachung des Hinweises auf die Patenterteilung: **29.10.1997**
(21) Anmeldenummer: 95114420.3
(22) Anmeldetag: 14.09.1995
(51) Int. Cl.: E05F 11/14, E05F 11/42, F16H 19/00

(54) **Zahnstangentrieb zur Betätigung von klappbaren Gebäudeverschlüssen**
Toothed rack drive for the control of tiltable building closures
Entraînement à crémaillère pour la commande de fermetures battantes de bâtiment

(43) Veröffentlichungstag der Anmeldung: 26.03.1997
(73) Patentinhaber: Lock Antriebstechnik Freimut Lock, 88521 Ertingen (DE)
(72) Erfinder: Traub, Andreas, D-88521 Ertingen (DE); Fluhr, Berthold, D-88521 Ertingen (DE)
(74) Vertreter: Patentanwälte Eisele, Otten & Roth

(56) Entgegenhaltungen:
- DE-A- 2 160 280

## Beschreibung

Die Erfindung betrifft einen Zahnstangentrieb nach dem Gattungsbegriff des Patentanspruchs 1. Er dient zur Betätigung von klappbaren Gebäudeverschlüssen, worunter Oberlichter, Lüftungsklappen, Gewächshausfenster und dergleichen verstanden werden. Solche Zahnstangentriebe sind meist Bestandteil ausgedehnter Anlagen, bei denen lange Rohrwellen durch das Gebäude geführt sind und ein Motor eine ganze Reihe von Zahnstangentrieben antreibt.

Bei einer aus der deutschen Offenlegungsschrift 31 06 872 bekannten Zahnstangenanordnung zum Öffnen und Schließen von Dachklappen ist vorgesehen, daß die Antriebswelle mit Hilfe eigener Lager an der Dachkonstruktion des Gebäudes drehbar gelagert ist. Die einzelnen Zahnstangentriebe befinden sich an der Welle neben oder in einem Abstand von den Lagern. Das jeweilige Zahnstangenritzel ist mit Hilfe geeigneter Verbindungsmittel in den Wellenstrang eingeschaltet. Die Zahnstange wird von einem Führungsgehäuse mit dem Ritzel in Eingriff gehalten. Da das Führungsgehäuse am Ritzel drehbar gelagert ist, kann die Zahnstange, deren Ende am Fensterflügel angelenkt ist, die beim Öffnen oder Schließen erforderliche Schwenkbewegung bezüglich der Wellenachse ausführen.

Ein anderer bekannter Zahnstangentrieb nach der US-Patentschrift 3 400 593 betätigt die Auswerfer einer Stanzpresse. Hierbei ist ein an dem Pressengrundgestell befestigtes Gehäuse vorgesehen, welches die Antriebswelle lagert und zugleich die Zahnstange führt und mit dem Ritzel in Eingriff hält. Diese Doppelfunktion des feststehenden Gehäuses hat jedoch zur Folge, daß die Zahnstange nicht schwenken, sondern nur ihre Längsbewegung ausführen kann.

Die Erfindung geht von einem Zahnstangentrieb der einleitend bezeichneten Gattung aus. Ein solcher ist zum Beispiel in der deutschen Patentschrift 21 60 280 dargestellt. Wesentlich ist hierbei, daß dieselbe Baueinheit sowohl die Antriebswelle lagert, als auch die Zahnstange führt, aber derart, daß die Zahnstange eine Schwenkbewegung um die Antriebsachse frei ausführen und dadurch eine Klappe unmittelbar betätigen kann. Es ist also zwischen einem feststehenden Lagergehäuse und einem schwenkbaren Führungsorgan zu unterscheiden. Letzteres besteht nach der genannten Patentschrift aus zwei die Zahnstange zwischen sich aufnehmenden Hälften in Gestalt sichelförmig gebogener Bleche. Zwischen den Enden dieser Bleche sind Rollen gelagert, die den Zahnstangenrücken abstützen. Andererseits legen sich die Bleche mit ihren inneren Bogenkanten über das Antriebsorgan, das in diesem Fall eine Stifttrommel ist, die von einer Vierkantwelle durchsetzt wird.

Dieser durchgehend aus Blechstanzteilen gefertigte Zahnstangentrieb erlaubt jedoch nur geringe Belastungen. Außerdem hat er im Gebrauch und bei der Montage den Nachteil, daß das Führungsorgan, welches nur teilweise um das Antriebsorgan herumgelegt ist, wegfällt, wenn die Zahnstange herausgenommen wird.

Auch ein aus der europäischen Patentschrift 0 121 062 bekannter Zahnstangentrieb ermöglicht zugleich die Lagerung der Antriebswelle und die Führung der Zahnstange. Es ist jedoch kein Führungsorgan vorhanden, das unmittelbar am Antriebsorgan drehbar gelagert ist. Stattdessen ist ein Führungsteil aus Kunststoff vorgesehen, das zwischen dem Rücken der Zahnstange und einer besonderen Innenlagerfläche des Lagergehäuses eingepaßt ist. Dieser Zahnstangentrieb ist verhältnismäßig kompliziert zu fertigen und bietet ebenfalls nicht die nötigen Voraussetzungen für besonders hohe Antriebsleistungen.

Der Erfindung liegt die Aufgabe zugrunde, einen einfachen und dadurch preisgünstig zu fertigenden Zahnstangentrieb zur unmittelbaren Klappenbetätigung vorzuschlagen, der an der Zahnstange eine hohe Druckkraft von zum Beispiel 400 kg aufbringt und hitzebeständig ist.

Diese Aufgabe wird ausgehend von einem Zahnstangentrieb der einleitend bezeichneten Gattung erfindungsgemäß durch die kennzeichnenden Merkmale des Patentanspruchs 1 gelöst. Danach ist das getrennte Führungsorgan ein unverlierbares Konstruktionselement, welches die Welle des aus einer Welle mit angeformtem Ritzel bestehenden Antriebsorgans in Drehlagern aufnimmt. Das Lagergehäuse umschließt das Führungsorgan und ist ebenfalls mit Drehlagern für die Welle ausgestattet. Sämtliche Teile bestehen aus Metall, sind einfach geformt und somit kostengünstig herzustellen bei gleichzeitig hoher Belastbarkeit.

Während die Wellen solcher Zahnstangentriebe bisher meist als Rohre ausgebildet waren, wird im Hinblick auf die höhere Belastung eine querschnittlich runde Welle aus Vollmaterial vorgeschlagen, an welcher eine im Durchmesser größere Ritzelverzahnung einstückig angeformt ist. Zum Anschluß einer Kupplung mit einer weiterführenden Antriebswelle wird zweckmäßigerweise an wenigstens einem Ende ein mehrkantiger Steckzapfen angeformt.

Das Lagergehäuse besteht am einfachsten aus zwei mit Hilfe von Abstandhaltern fest miteinander verbundenen Platten, in welche Lagerringe für die Welle eingesetzt sind. Die Abstandhalter können Platten, Bolzen oder dergleichen sein. Auf eine Ausführungsform, die gleichzeitig einen weiteren Zweck erfüllt, wird unten eingegangen.

Eine Möglichkeit der Lagerung der Welle des Ritzels besteht darin, daß in das Lagergehäuse und in das Führungsorgan Sinterlagerringe eingesetzt sind, die sich gegeneinander abstützen und jeweils mit einer Schulter an der Außenfläche des Führungsorgans bzw. an der Innenfläche des Lagergehäuses anliegen. Zweckmäßig ist es, Sinterlagerringe zu verwenden, die gleiche Form und Größe haben und paarweise spiegelbildlich aneinander liegen.

Für allerhöchste Belastungen empfiehlt es sich, in das Lagergehäuse und in das Führungsorgan Kugellagerringe einzusetzen und diese gegen Achsialverschiebung unmittelbar an dem Teil zu sichern, in das sie eingesetzt sind. In Weiterbildung dieser Ausführungsform wird vorgeschlagen, daß das Führungsorgan zu den Innenflächen des Lagergehäuses einen Abstand hat, so daß bei auftretenden Achsialbewegungen des Antriebsorgans, beispielsweise infolge thermischer Wirkungen auf einen langen Wellenstrang, das Ritzel mitsamt dem Führungsorgan sich mitbewegen kann.

Um die auftretenden Belastungen ausgedehnter Antriebsanlagen mit langen Wellen auffangen zu können, dürfen die Lagergehäuse an der Gebäudestruktur nicht starr befestigt sein. Eine sehr einfache Möglichkeit, den erforderlichen Bewegungsspielraum zu schaffen, besteht darin, daß die schon erwähnten Abstandhalter, welche die Platten des Lagergehäuses miteinander verbinden, rohrförmige Distanzstücke sind, deren im Durchmesser reduzierte Enden in Bohrungen der Platten eingreifen und außen umgebördelt sind. Erfolgt nämlich jetzt die Befestigung am Gebäude mit U-förmigen Bügeln, die mit einem Schenkel durch jeweils ein solches Distanzrohr gesteckt sind und an den Schenkelenden Schraubgewinde zum Anschrauben an einen Träger haben, dann ergibt sich ein allseitiges und ausreichend großes Spiel dadurch, daß die Bügelschenkel einen wesentlich kleineren Durchmesser haben als der Innendurchmesser der Distanzrohre und daß sie länger als die Distanzrohre sind. Der ganze Zahnstangentrieb kann also erforderlichenfalls in Achsrichtung oder in jeder dazu senkrechten Richtung nachgeben.

Ein anderer Vorschlag, das Lagergehäuse mit Spiel zu befestigen, besteht darin, daß es mit Hilfe zweier Winkelprofilschienen an dem betreffenden Gebäudeteil angeschraubt ist, wobei an den Schenkeln der Winkelprofilschienen für die Schrauben Langlöcher angebracht sind, die sich an dem einen Schenkel parallel und an dem jeweiligen anderen Schenkel senkrecht zur Winkelkante erstrecken. Damit ergeben sich zwar nur Bewegungsmöglichkeiten in zwei zueinander senkrechten radialen Richtungen. Wie vorstehend erwähnt, kann jedoch durch eine schmälere Bemessung des Führungsorgans innerhalb des Lagergehäuses Achsialspiel gegeben werden, so daß wiederum eine Nachgiebigkeit in allen Richtungen gewährleistet ist.

Schließlich ist für die Betriebssicherheit eines solchen Zahnstangentriebes eine exakte Führung der Zahnstange von größter Wichtigkeit. Als kostengünstige und zuverlässige Stützrollen am Führungsorgan werden deshalb Laufrollenlager vorgeschlagen, die je einen Innen- und Außenring und wenigstens zwei nebeneinander angeordnete Kugelkränze gleichen Durchmessers aufweisen. Um die Zahnstange seitlich leicht gleitend und möglichst spielfrei im Führungsorgan abzustützen, wird vorgeschlagen, daß in die beiden Hälften des Führungsorgans von der Innenseite her Pfropfen aus einem gleitfähigen Werkstoff eingesetzt sind, deren Kopfbereiche an den Zahnstangenflanken anliegen.

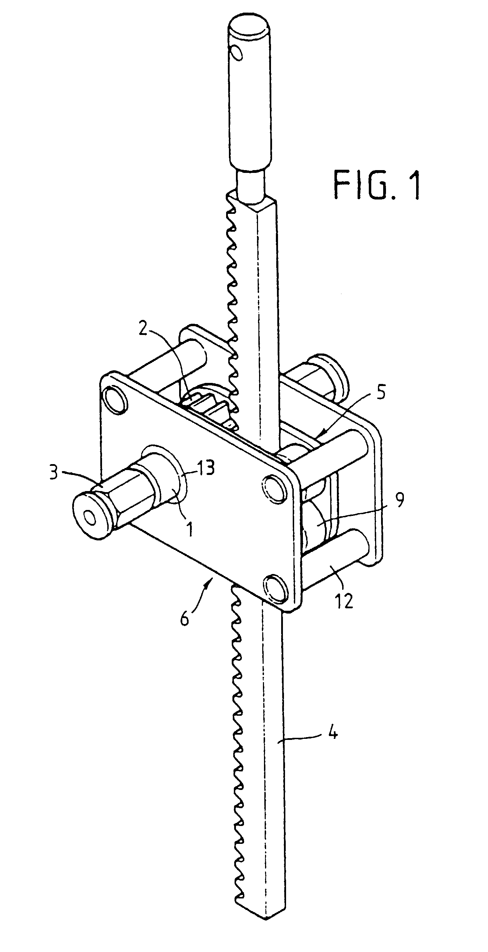

Zwei Ausführungsbeispiele der Erfindung werden nachfolgend anhand der Zeichnung erläutert. Im einzelnen zeigt
- Fig. 1: eine räumliche Ansicht eines ersten Zahnstangentriebes,
- Fig. 2: eine axiale Ansicht des Zahnstangentriebs nach Figur 1 im Schnitt,
- Fig. 3: eine Seitenansicht des Zahnstangentriebs nach Figur 1 senkrecht zur Achsebene, ebenfalls im Schnitt,
- Fig. 4: eine axiale Ansicht eines zweiten Zahnstangentriebs mit Teilschnitt IV-IV und
- Fig. 5: ein Schnittbild des Zahnstangentriebs nach Figur 4 parallel zur Achsebene.

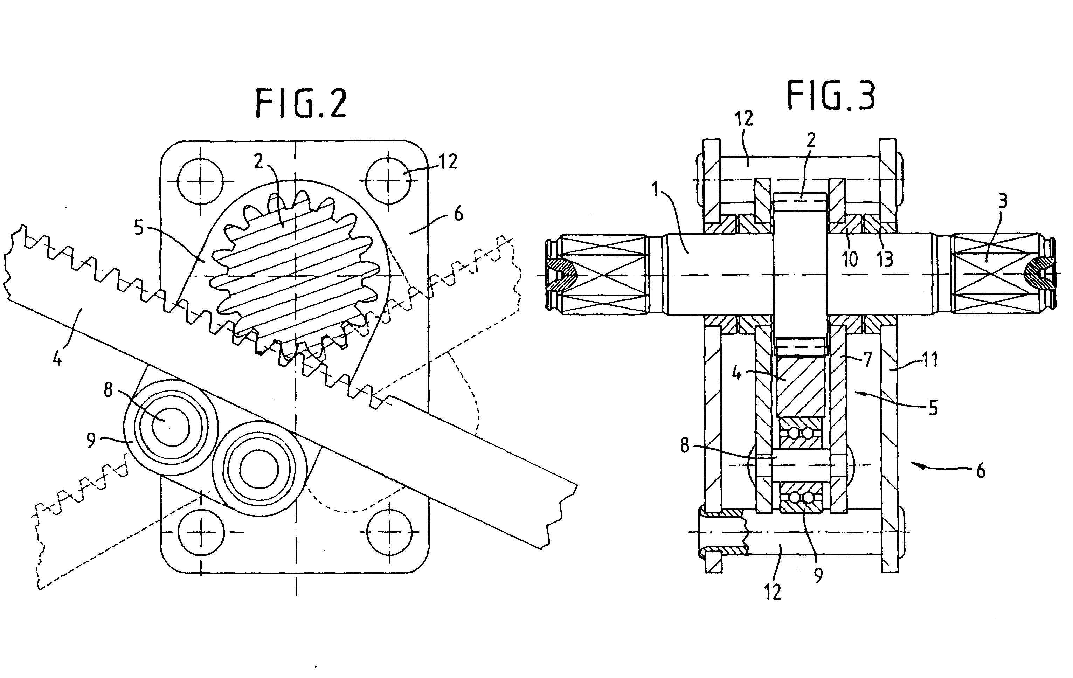

Die Einzelteile des Zahnstangentriebs nach dem ersten Ausführungsbeispiel werden am besten anhand von Figur 3 erläutert. Das Antriebsorgan umfaßt eine massive Welle 1, an der ein Ritzel 2 größeren Durchmessers angeformt ist. Beide Wellenenden weisen Sechskantzapfen 3 zum Ankuppeln einer ankommenden bzw. einer weiterführenden Antriebswelle auf. Eine querschnittlich rechteckige Zahnstange 4 wird mittels eines Führungsorgans 5 mit dem Ritzel 2 in Eingriff gehalten. Ein Lagergehäuse 6 umfaßt das Führungsorgan 5.

Das Führungsorgan besteht aus zwei Platten 7, die zu beiden Seiten des Ritzels 2 auf der Welle 1 gelagert und durch zwei vernietete Distanzzapfen 8 auf Abstand zusammengehalten sind. Jeder der beiden Distanzzapfen trägt ein Laufrollenlager 9 mit zwei Kugelkränzen. Die Außenschalen der Laufrollenlager wälzen sich auf dem Rücken der Zahnstange 4 ab. Zur Lagerung der Welle 1 sind in die Platten 7 zwei Sinterlagerringe 10 von außen eingesteckt. Sie stützen sich jeweils mit einer Schulter an der Außenfläche der Platten 7 ab.

Das Lagergehäuse 6 umfaßt zwei rechteckige Platten 11, die durch vier rohrförmige Distanzstücke 12 auf Abstand fest zusammengehalten sind. Die Distanzstücke 12, von denen eines teilweise aufgeschnitten dargestellt ist, sind nach Art von Hohlnieten umgebördelt, so daß die durchgehenden Rohröffnungen unbehindert bleiben. Jede der beiden Platten 11 hat die gleiche runde Lageröffnung wie die Platten 7 des Führungsorgans. Auch in diese Lageröffnungen sind Sinterlagerringe 13 gleicher Form wie die schon erwähnten von der Innenseite her eingesteckt. Somit stützen sich im zusammengebauten Zustand die Sinterlagerringe 10 und 13 jeweils spiegelbildlich aneinander ab.

Figur 2 macht am besten deutlich, wie das Führungsorgan 5 mit der Zahnstangen in einem bestimmten beschränkten Winkelbereich innerhalb des feststehenden Lagergehäuses 6 um die Ritzelachse schwenken kann. Diese Schwenkbarkeit ist für viele Anwendungen eine unabdingbare Voraussetzung.

Abgesehen von den Kostenvorteilen, die sich aus den einfachen Formen der Einzelteile ergeben, ist auch die Montage besonders einfach. Sie beschränkt sich darauf, zunächst die Teile des Führungsorgans 5 zusammenzustecken. Unter Umständen kann auch auf die Vernietung oder Verschraubung der Distanzzapfen verzichtet werden. Sodann werden die Einzelteile des Lagergehäuses 6 zusammengesteckt und zum Schluß die Distanzstücke 12 vernietet.

An locker durch die Distanzstücke 12 durchgesteckten Bügelschenkeln oder Stiften wird das Lagergehäuse an einer Gebäudestruktur allseitig spielgebend befestigt.

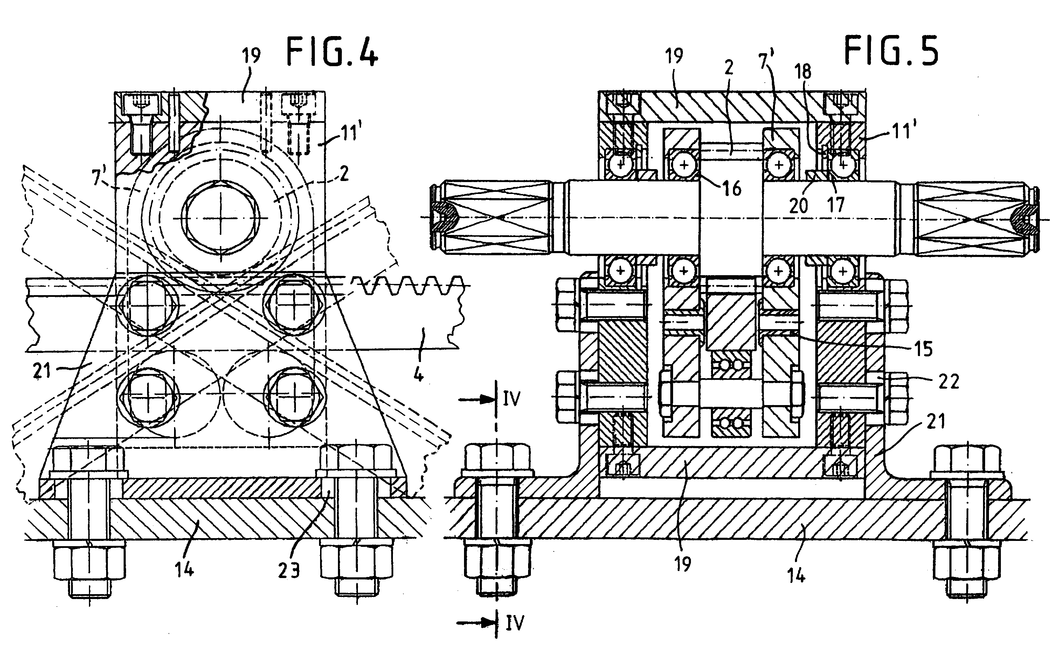

Der Zahnstangentrieb nach dem zweiten Ausführungsbeispiel gemäß den Figuren 4 und 5 ist für eine Zahnstangenbelastung von 400 Kilogramm ausgelegt. Es handelt sich um eine stabile Metallplatten-Konstruktion mit Kugellagern. Ferner unterscheidet sich dieses Beispiel vom vorhergehenden durch eine andere Art der Befestigung des Lagergehäuses an der Gebäudestruktur, beispielsweise einer Tragplatte 14. Schließlich ist die Zahnstange 4 gegenüber den Platten 7' des Führungsorgans über Gleitstopfen 15 abgestützt, die von der Innenseite her in Bohrungen dieser Platten eingesteckt sind und deren Kopfpartien die Abstützung der Zahnstange bewirken.

Die Kugellager 16 der Platten 7' sind von der Innenseite her in diese eingesetzt und werden somit zwischen einer Schulter an der Lageröffnung und der Flanke des Ritzels 2 gehalten. Die Distanzzapfen 8 sind hier verschraubt. Andererseits sind die Kugellager 17 der Platten 11' des Lagergehäuses, die ebenfalls von innen her eingesetzt werden und an eine Schulter der Lageröffnung stoßen, durch Federringe 18 gesichert. Die Distanzierung und Verbindung der beiden Platten 11' erfolgt bei diesem Ausführungsbeispiel mit Stirnplatten 19. Sie sind mit den Platten 11' verstiftet und verschraubt. Wesentlich ist, daß hier ein nicht unbeträchtlicher Abstand zwischen dem Führungsorgan und dem Lagergehäuse besteht, der es dem Antriebsorgan samt dem Führungsorgan und der Zahnstange erlaubt, innerhalb des Lagergehäuses eine achsiale Ausgleichsbewegung zu vollziehen, sofern dies erforderlich ist. Durch die Auswahl entsprechend bemessener Distanzringe 20, die auf jeder Seite zwischen den Kugellagern 16 und 17 eingelegt sind, kann das gewünschte Axialspiel definiert werden.

Zur Befestigung des Lagergehäuses an der Tragplatte 14 sind zwei Abschnitte von Winkelschienen 21 vorgesehen. Die zu der Tragplatte 14 senkrechten Schenkel der Winkelschienen sind mit dem Lagergehäuse und die anderen Schenkel mit der Tragplatte 14 verschraubt. Da die Antriebsachse parallel zur Tagplatte 14 verläuft, sind zur Herbeiführung einer Bewegungsmöglichkeit des Antriebsorgans nach allen Richtungen die Schraubenlöcher in beiden Schenkeln der Winkelschienen 21 als Langlöcher ausgeführt. Die Richtung der Langlöcher 22 und 23 verläuft jeweils senkrecht zur Antriebsachse.

### Bezugszeichenliste:

- 1: Welle
- 2: Ritzel
- 3: Sechskantzapfen
- 4: Zahnstange
- 5: Führungsorgan
- 6: Lagergehäuse
- 7: Platte
- 7': Platte
- 8: Distanzzapfen
- 9: Laufrollenlager
- 10: Sinterlagerring
- 11: Platte
- 11': Platte
- 12: Distanzstück
- 13: Sinterlagerring
- 14: Tragplatte
- 15: Gleitstopfen
- 16: Kugellager
- 17: Kugellager
- 18: Federring
- 19: Stirnplatte
- 20: Distanzringe
- 21: Winkelschiene
- 22: Langloch
- 23: Langloch

## Patentansprüche

1. Zahnstangentrieb zur Betätigung von klappbaren Gebäudeverschlüssen mit einem um eine Achse drehbaren Antriebsorgan, mit einer Zahnstange (4), mit einem um die Achse des Antriebsorgans schwenkbaren Führungsorgan (5), das aus zwei Hälften besteht, welche die Zahnstange (4) zwischen sich aufnehmen und seitlichen führen, und das die Zahnstange (4) am Zahnstangenrücken über Rollen (9) abstützt, deren Achsen die Hälften durchsetzen und miteinander verbinden, und mit einem an einem Gebäudeteil anbringbaren Lagergehäuse (6), welches das Antriebsorgan drehbar lagert, dadurch gekennzeichnet, daß das Antriebsorgan eine Welle (1) umfaßt, an der ein Ritzel (2) ausgebildet ist, daß die beiden Hälften des Führungsorgans (5) sich zu beiden Seiten außen am Ritzel (2) anlegen und Lager (10) aufweisen, in denen die Welle (1) zu beiden Seiten des Ritzels (2) drehbar aufgenommen ist, und daß das Lagergehäuse (6) das Führungsorgan (5) umschließt und ebenfalls Lager (13) für die Welle (1) aufweist.

2. Zahnstangentrieb nach Anspruch 1, dadurch gekennzeichnet, daß die Welle (1) querschnittlich rund und mit dem Ritzel (2) aus Vollmaterial hergestellt ist und an wenigstens einem Ende einen angeformten mehrkantigen Steckzapfen (3) zum Anschluß einer Wellenkupplung aufweist.

3. Zahnstangentrieb nach Anspruch 1, dadurch gekennzeichnet, daß das Lagergehäuse (6) aus zwei mit Hilfe von Abstandhaltern fest miteinander verbundenen Platten (11) besteht, in welche Lagerringe (13) für die Welle (1) eingesetzt sind.

4. Zahnstangentrieb nach Anspruch 3, dadurch gekennzeichnet, daß in das Lagergehäuse (6) und in das Führungsorgan (5) Sinterlagerringe eingesetzt sind, die sich gegeneinander abstützen und jeweils mit einer Schulter an der Außenfläche des Führungsorgans bzw. an der Innenfläche des Lagergehäuses anliegen (Fig. 3).

5. Zahnstangentrieb nach Anspruch 4, dadurch gekennzeichnet, daß die Sinterlagerringe (10, 13) die gleiche Form und Größe haben und paarweise spiegelbildlich aneinander liegen.

6. Zahnstangentrieb nach Anspruch 1, dadurch gekennzeichnet, daß in das Lagergehäuse und in das Führungsorgan Kugellagerringe (15, 17) eingesetzt und gegen Achsialverschiebung jeweils an dem betreffenden Bauteil selbst gesichert sind und daß das Führungsorgan zu den Innenflächen des Lagergehäuses einen Abstand hat.

7. Zahnstangentrieb nach Anspruch 3, dadurch gekennzeichnet, daß die Abstandhalter der Platten (11) des Lagergehäuses rohrförmige Distanzstücke (12) sind, deren im Durchmesser reduzierte Enden in Bohrungen der Platten (11) eingreifen und außen umgebördelt sind.

8. Zahnstangentrieb nach Anspruch 1, dadurch gekennzeichnet, daß er mit Hilfe zweier Winkelprofilschienen (21) an einem Gebäudeteil (14) angeschraubt ist, wobei in den Schenkeln der Winkelprofilschienen für die Schrauben Langlöcher (22, 23) angebracht sind, die sich senkrecht zur Antriebsachse erstrecken.

9. Zahnstangentrieb nach Anspruch 1, dadurch gekennzeichnet, daß die Rollen am Führungsorgan Laufrollenlager (9) sind, die je einen Innen- und einen Außenring und wenigstens zwei nebeneinander angeordnete Kugelkränze gleichen Durchmessers aufweisen.

## Claims

1. Rack and pinion for actuating hinged closures in buildings with a drive member able to rotate about an axis, with a toothed rack (4), with a guide member (5) able to tilt about the axis of the drive member, which member (5) consists of two halves, which receive the toothed rack (4) between them and guide it laterally and which supports the toothed rack (4) on the back of the toothed rack by way of rollers (9), whereof the spindles penetrate the halves and connect them to each other, and with a bearing housing (6) able to be located on a building part, which housing mounts the drive member in a rotary manner, characterised in that the drive member comprises a shaft (1), on which a pinion (2) is formed, that the two halves of the guide member (5) bear on both sides externally against the pinion (2) and comprise bearings (10), in which the shaft (1) is received in a rotary manner on both sides of the pinion (2) and that the bearing housing (6) encloses the guide member (5) and likewise comprises bearings (13) for the shaft (1).

2. Rack and pinion according to Claim 1, characterised in that the shaft (1) is round in cross-section and is produced with the pinion (2) from solid material and at at least one end comprises an integrally formed, many-sided plug-in journal (3) for the connection of a shaft coupling.

3. Rack and pinion according to Claim 1, characterised in that the bearing housing (6) consists of two plates (11) securely connected to each other by means of spacer members, in which plates bearing rings (13) for the shaft (1) are inserted.

4. Rack and pinion according to Claim 3, characterised in that inserted in the bearing housing (6) and in the guide member (5) are sintered bearing rings, which are supported one against the other and each bear by a shoulder against the outer surface of the guide member or against the inner surface of the bearing housing (Figure 3).

5. Rack and pinion according to Claim 4, characterised in that the sintered bearing rings (10, 13) have the same shape and size and bear against each other in pairs in the manner of a mirror image.

6. Rack and pinion according to Claim 1, characterised in that inserted in the bearing housing and in the guide member are ball bearing rings (15, 17) and are themselves prevented from axial displacement in each case on the respective component and that the guide member is at a distance from the inner surfaces of the bearing housing.

7. Rack and pinion according to Claim 3, characterised in that the spacer members for the plates (11) of the bearing housing are tubular distance pieces (12), whereof the ends of reduced diameter engage in bores in the plates (11) and are flanged-over on the outside.

8. Rack and pinion according to Claim 1, characterised in that it is screwed by means of two angle profile bars (21) to a building part (14), slots (22, 23) being located in the sides of the angle profile bars for the screws, which slots extend at right angles to the axis of the drive.

9. Rack and pinion according to Claim 1, characterised in that the rollers on the guide member are roller bearings (9), which each comprise an inner and an outer ring and at least two ball races of the same diameter arranged one beside the other.

## Revendications

1. Entraînement à crémaillère pour la commande de fermetures battantes de bâtiment, comportant
• un organe d'entraînement tournant autour d'un axe,
• une crémaillère (4),
• un organe de guidage (5) pouvant basculer autour de l'axe de l'organe d'entraînement, composé de deux moitiés qui encadrent la crémaillère (4) et la guident latéralement, l'organe de guidage supportant le dos de la crémaillère (4) par l'intermédiaire de galets (9) dont les axes traversent les moitiés de l'organe et en assurent la liaison,
• un boîtier porteur (6) que l'on peut accrocher à un élément de bâtiment et dans lequel est monté tournant l'organe d'entraînement,
caractérisé en ce que
l'organe d'entraînement comprend un arbre (1) portant un pignon (2), les deux moitiés de l'organe de guidage (5) sont en contact latéral avec les deux faces externes du pignon (2) et portent des paliers (10) situés de part et d'autre du pignon (2) et dans lesquels l'arbre (1) est monté tournant, le boîtier porteur (6) entourant l'organe de guidage (5) et comportant également des paliers (13) pour l'arbre (1).

2. Crémaillère selon la revendication 1,
caractérisée en ce que
l'arbre (1) a une section transversale circulaire et constitue avec le pignon (2) une seule pièce massive dont au moins une extrémité est un embout d'emmanchement (3) de section polygonale, permettant le raccordement à un accouplement d'arbre.

3. Crémaillère selon la revendication 1,
caractérisée en ce que
le boîtier porteur (6) est constitué de deux plaques (11) rendues solidaires par des organes de maintien d'espacement et dans lesquelles sont emmanchées des bagues-paliers (13) supportant l'arbre (1).

4. Crémaillère selon la revendication 3,
caractérisée en ce que
dans le boîtier porteur (6) et dans l'organe de guidage (5) sont emmanchés des coussinets frittés s'appuyant les uns sur les autres et dont chacun présente un épaulement par lequel il s'appuie sur la face externe de l'organe de guidage ou sur la face interne du boîtier de palier.

5. Crémaillère selon la revendication 4,
caractérisée en ce que
les coussinets frittés (10, 13) ont des formes et dimensions identiques et sont accouplés en contact par paires constituées chacune de deux pièces disposées symétriquement.

6. Crémaillère selon la revendication 1,
caractérisée en ce que
dans le boîtier porteur et dans l'organe de guidage sont emmanchés des roulements à billes (15, 17) à chacun desquels est associée, sur l'élément correspondant, une sécurité empêchant son déplacement axial par rapport à cet élément, l'organe de guidage étant situé à une certaine distance des faces intérieures du boîtier porteur.

7. Crémaillère selon la revendication 3,
caractérisée en ce que
les organes de maintien de l'espacement des plaques (11) du boîtier porteur sont des pièces d'espacement (12) tubulaires dont les extrémités, réduites en diamètre, sont engagées dans des perçages des plaques (11)- et rabattues vers l'extérieur.

8. Crémaillère selon la revendication 1,
caractérisée en ce qu'
elle est vissée à travers deux cornières (21) dans une pièce de bâtiment (14), les ailes des cornières étant percées de trous de passage des vis ayant la forme de boutonnières (22, 23) perpendiculaires à l'axe d'entraînement.

9. Crémaillère selon la revendication 1,
caractérisée en ce que
les galets supportant l'organe de guidage sont des paliers à roulements (9) comportant chacun une bague externe et une bague interne encadrant au moins deux rangées de billes disposées côte à côte et de même diamètre.
